(19) Europäisches Patentamt
European Patent Office
Office européen des brevets

(11) **EP 0 701 503 B1**

(12) **EUROPEAN PATENT SPECIFICATION**

(45) Date of publication and mention
of the grant of the patent:
**09.08.2000 Bulletin 2000/32**

(51) Int. Cl.⁷: **B28B 3/22**

(21) Application number: **94917000.5**

(86) International application number:
**PCT/FI94/00233**

(22) Date of filing: **02.06.1994**

(87) International publication number:
**WO 94/27797 (08.12.1994 Gazette 1994/27)**

(54) **METHOD AND APPARATUS FOR CASTING CONCRETE PRODUCTS**

VERFAHREN UND VORRICHTUNG ZUM GIESSEN VON BETONFERTIGTEILEN

PROCEDE ET APPAREIL SERVANT A COULER DES PRODUITS EN BETON

(84) Designated Contracting States:
**DE FR GB NL SE**

(30) Priority: **02.06.1993 FI 932509**

(43) Date of publication of application:
**20.03.1996 Bulletin 1996/12**

(73) Proprietor:
**Addtek Research & Development Oy Ab**
**03101 Nummela (FI)**

(72) Inventor: **RAUTILA, Matti**
**FIN-04300 Tuusula (FI)**

(74) Representative:
**Price, Paul Anthony King et al**
**D. Young & Co.,**
**21 New Fetter Lane**
**London EC4A 1DA (GB)**

(56) References cited:
**CH-A- 323 266**     **US-A- 4 927 573**

## Description

This invention relates to a method for slide casting a concrete product, comprising using a slide casting machine which compacts a concrete mix having a consistency suitably stiff for the slide casting, wherein the hardening reaction of the concrete mix is speeded up by adding to the concrete mix an additive which speeds up this reaction and which is led into the concrete mix before the concrete mix is shaped into its final form and extruded from the slide casting machine, the additive being carbon dioxide gas. The invention also relates to apparatus for casting a concrete product having one or more cavities by a slide casting method using a pressurized concrete mix, which apparatus has a mould part for moving on a casting bed and formed by side and top surfaces and also forming a compaction chamber containing one or more compacting members, and which apparatus is provided with means leading into the compaction chamber at feeding screws for leading additive into the concrete mix.

Carbon dioxide is known to speed up the hardening reaction of concrete. The use of carbon dioxide in concrete technology has been described i.a. in FI patent publications 66139 and 72965. FI patent publication 66139 describes a vacuum concreting method, wherein the concrete product is hardened by first subjecting the concrete mix to negative pressure and by then leading carbon dioxide into the product's capillaries. FI patent publication 72965 describes a method wherein carbon dioxide is used to harden concrete sprayed in a fluid state so that carbon dioxide is introduced into the concrete mix before spraying, and carbon dioxide is also used as a propellant in the spraying process.

US patent publication 4 927 573 describes a method comparable with the method described in the above FI patent publication 66139. According to the US publication, pressurized carbon dioxide is supplied into concrete mix which is under pressure in a mould to speed up hardening. The carbon dioxide is supplied only when compacting of the concrete product is completed and the product has been given its final shape, whereby the gas works only on the surface of the product. Since the gas is supplied into a fixed mould, outside the finally shaped product, the gas must be under a very high pressure.

Thus, using carbon dioxide as an accelerator of the hardening reaction of concrete is known as such, but the problem is how to bring about a functioning method in production operations.

CH patent publication 323 266 describes casting of elongated profile beams of concrete by using an extrusion method. However, the device described in this publication is not a moving casting machine and it is not suitable for casting prestressed concrete products. The publication mentions the use of additives which increase elasticity or bring about quick binding. The additives are supplied to the concrete mix during the compaction and forming stages, before final shaping. However, the publication does not describe specifically what kind of additives are used. Various liquids or solid materials were generally used in the prior art as concrete additives for the mentioned purposes. They were intended among other things to reduce the stiffness of the concrete mix or to either accelerate or slow, down hardening.

A known slide casting method and equipment for casting hollow-core slabs is described in FI patent publication 70821. Casting is by the extrusion method and as a continuous process by using concrete mix of a relatively stiff consistency. This is brought under pressure into the mould part of a casting machine moving on a bed, which mould part is formed by side faces and a top face located against the bed. The mould part also forms a compaction chamber, wherein the concrete mix is compacted with the aid of feeding screws and compacting mandrels. The feeding screws bring about a casting pressure in the concrete mix causing the casting machine to move on its bed while the concrete is discharged. The concrete is of a sufficiently stiff consistency for the cast product to maintain its shape while discharging from the casting machine.

However, in the conventional slide casting method the problem occurs, among others, that the top face of the cast hollow-core slab tends to sag at the cavities, whereby, for example, quite a large amount of separate levelling material must be applied at the building stage to make the slab form an even floor. This increases building costs as regards both labour and materials.

The method in accordance with the present invention is characterized in that:

the carbon dioxide is discharged from a pressure vessel and is heated to keep its temperature above 0°C, preferably at least at 18°C;
the overpressure of the carbon dioxide is 1 - 20 atmospheres, preferably about 10 atmospheres;
the quantity of the carbon dioxide measured at atmospheric pressure is 0.1 - 3 times, preferably 0.5 - 1 times, the volume of the concrete mix; and
the carbon dioxide is supplied into the concrete mix not more than 60 seconds, preferably 1- 30 seconds, before the final compaction of the concrete.

The apparatus according to the invention is characterized in that the means for leading the additive into the concrete mix comprises one or more nozzles for feeding pressurized gas and a flow meter connected to each nozzle.

When carbon dioxide is supplied to the concrete mix it displaces air in the pores in the concrete mix and reacts with the calcium hydroxide in the concrete mix. This known reaction is the following:

$$Ca(OH)_2 + CO_2 = CaCO_3 + H_2O$$

As the carbon dioxide is binding, a negative pressure of about 1 atmosphere results from the reaction, which promotes the compaction of the concrete. At the same time, resulting calcium carbonate fills all remaining pores. Solid material is brought about in the concrete instead of the gas. The resulting negative pressure makes the pores compress under the effect of outside pressure. In this way a chemical reaction together with a physical phenomenon bring about efficient compaction.

In consequence, the volume weight of the concrete mix increases by at least 35 kg/m$^3$, preferably by about 50 kg/m$^3$, compared with conventional extruder casting not using the treatment by carbon dioxide according to this invention. Using the method according to the invention, a final product is obtained on an industrial scale with a density which is even as much as 99.7 per cent of the theoretical maximum density. This is a significant improvement over previously known concrete products made by slide casting. As a result, also other properties of the product improve, such as waterproofness and durability. Previous mechanical compaction methods did not allow such complete removal of air from relatively dry concrete mix suitable for slide casting. The strength and density of the product improve not only due to the removal of air but also because they are improved by the calcium carbonate which becomes part of the concrete mix in consequence of the reaction.

The compacting screw of the casting machine creates a pressure in the concrete mix, which again speeds up the reaction mentioned above. As the reaction is very quick, it is important to feed the gas into the concrete as late as possible before its final shaping.

However, feeding must be performed already during compaction, before the compaction pressure of the concrete has risen so much that it will resist the feeding of gas. When feeding the gas at a suitably early stage at the front end of the compacting screw, only the hydrostatic pressure will exist in the concrete, but there will not yet be any compaction pressure created by the conical compacting screw. At this stage the gas is made to mix well with the concrete mix.

By using carbon dioxide, the fresh strength of the concrete is increased, for which reason slab saggings are smaller, and smaller manufacturing tolerances are achieved on the whole. The product's cross-section remains as designed and less material is wasted in this regard. The increased early strength achieved with the method facilitates and speeds up the handling and moving of the cast products, because there is less risk of breaking of e.g. corners.

The strength of the cast slab after e.g. 6 hours may increase by about 10 - 20 per cent compared with the prior art. This clearly accelerates the production process as a whole. This means that either a quicker process with the same quantity of binder (cement) is obtained, or the quantity of the binder can be reduced while the speed of the process remains the same. In some cases the product's wall thickness may be reduced, because even less strength in the finished product will be sufficient in several applications.

According to the invention, carbon dioxide is supplied into the concrete mix just before the final compaction stage. The preferable time between the feeding of carbon dioxide and concrete compaction is about 1 - 30 seconds, depending on the casting speed of the machine producing the product, on the cement quality and on the temperature of the concrete mix. When carbon dioxide is supplied into the compaction chamber, it displaces air in the concrete mix which has not yet compacted.

At the time of feeding carbon dioxide into the concrete mix, the carbon dioxide must have the correct pressure, a suitable overpressure being about 1 - 20 atmospheres, preferably about 10 atmospheres. The gas flow must be controlled exactly so that too much gas will not discharge. Discharging too much gas in one go from the gas bottle would result in an excessive vaporization space and thus also in excessive cooling of the gas. To bring about the correct gas flow, each gas feeding nozzle must be provided with a flow meter of its own, for example, with a rotameter. The gas must also be heated constantly, so that when discharging it will not cool but its temperature will remain at over 0°C all the time, preferably at about 18 - 30°C. Heating, too, requires exact control.

A suitable gas quantity is about 0.1 - 3 times the concrete volume, whereby the gas volume is expressed at atmospheric pressure.

By supplying gas into the concrete mix before this has been formed into a final product, the gas pressure will not be applied to the mould itself and will thus not put any stress on the mould, which happens when gas is fed onto the surface of an already formed product.

By selecting a suitable carbon dioxide quantity and temperature, desired properties may be chosen for the concrete, for example, increased fresh strength. Other gaseous substances may also be led into the concrete mix which have desired effects on the properties of the concrete mix.

Compacting the concrete under pressure speeds up and intensifies the desired effects obtained by using carbon dioxide. It is a known fact that chemical reactions can usually be speeded up by increasing the pressure. Leading carbon dioxide into the concrete mix while at the same time compacting it and increasing its pressure thus brings about a very quick reaction.

Non-limiting embodiments of the invention are described in the accompanying drawings, wherein:

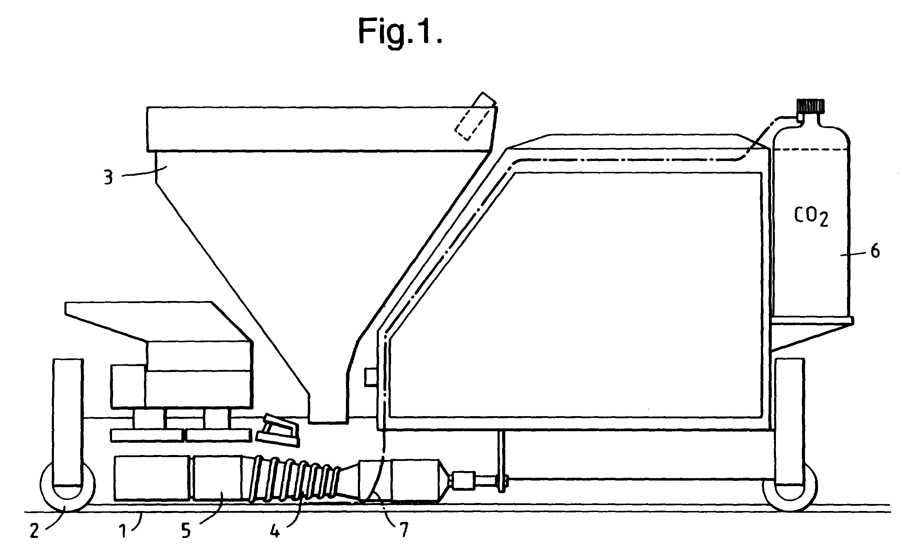

Figure 1 is a side view of apparatus according to the invention;

Figure 2 shows the gas supply arrangement of the apparatus of Figure 1; and

Figures 3a and 3b show the shear surfaces of a product made with the method according to the invention and with a prior art method, respectively.

The slide casting machine is known as such. It moves on a bed 1 carried by wheels 2. Concrete mix is supplied from a hopper 3 onto conical feeding screws 4, of which the equipment has one or several in parallel. A compacting mandrel 5 is a continuation to each feeding screw. The feeding screws and compacting mandrels are surrounded by a top wall and side walls, which form a compaction chamber together with the casting bed. The concrete mix is compacted inside these, around the compacting mandrels, and is formed into a hollow-core slab as the casting machine is moving to the right in the figure under the effect of a reaction force of the concrete mix which is pressurized by the feeding screws. The machine moves at a speed of about 0.5 - 3 m/min, preferably about 1 - 2 m/min, depending on the cross-sectional area of the product to be cast. A higher speed can be used with smaller cross-sectional surfaces.

To produce apparatus according to the invention the slide casting machine is combined with a carbon dioxide vessel 6, from which a gas supply pipe 7 leads to each feeding screw. The length of nozzle part 8 of the supply pipe is chosen so that gas will enter the concrete at the right time, that is, about 1 - 30 seconds before final compaction of the concrete. The supply point depends on the machine's speed of progress and on the concrete quality. The nozzle part has one or several holes, from which the gas is discharged into the concrete mix.

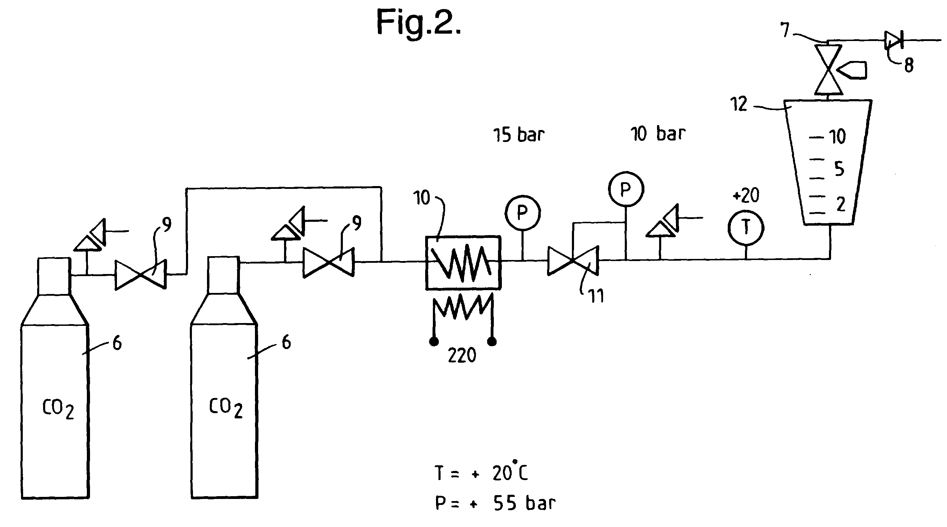

Figure 2 shows in greater detail two carbon dioxide bottles 6 and how these are connected to the gas supply pipe 7. Gas flows from each bottle by way of control valve 9 into an adjustable heater 10 and then by way of control valve 11 to rotameter 12.

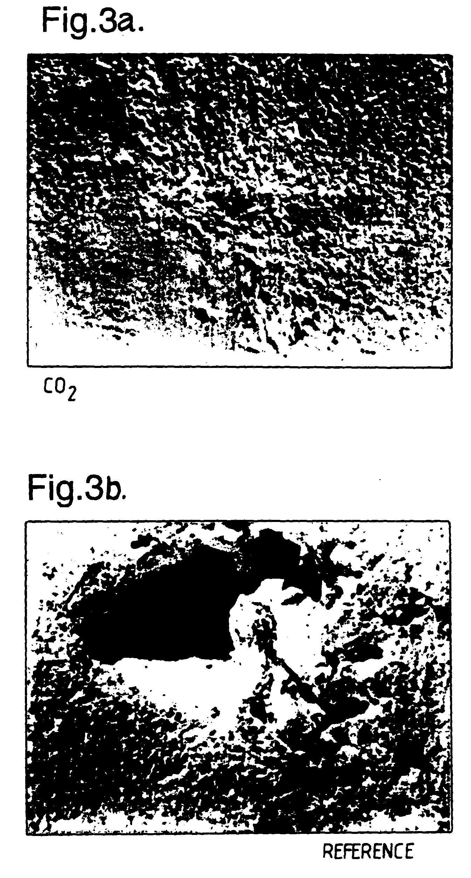

Figures 3a and 3b show photographs of a product made with the method according to the invention and with a prior art method, respectively. Using a diamond drill, a cylindrical piece was cut off the products made with both methods. Photographs were taken of the shear surface and enlarged 6 times. The pictures clearly show the difference between the products. The product made by using carbon dioxide is perfectly compact, whereas the product obtained without adding any carbon dioxide has large pores and air bubbles.

An example is given in the following of mix proportions of concrete mix for use in the method according to the invention and of the effect of carbon dioxide on the fresh strength of the product.

A trial run was performed with a one-tube extruder, that is, using a device provided with one feeding screw followed by a compacting mandrel. A concrete pipe results as the product. The concrete mix fed into the extruder had the following mix proportions:

| Stone aggregate | 2010 kg/m$^3$ |
|---|---|
| Cement | 330 kg/m$^3$ |
| W/C (water-cement ratio) | 0.40 |

The feeding of $CO_2$ was arranged from below the feeding screw in such a way that the gas flowed into the fresh concrete at the rear end of the screw, about 80 mm before the beginning of the compacting mandrel. The corresponding point of time is about 10 seconds before final compaction. About 1 litre of gas was supplied for every one litre of concrete mix moving through the casting machine (the gas volume is expressed at atmospheric pressure, before its compression in the pressurized concrete mix).

The fresh strength of compacted concrete was valuated firstly by a pipe loading test by pressing whole cast pipes until they broke and secondly by loading pipe wall pieces with a penetrometer. In the pipe loading test, the pipe rested on its side on a bed and it was pressed by a horizontal loading plane. The loading force was measured. The test samples were tested immediately after casting.

The pipe loading test showed that $CO_2$-treated pieces withstood an average load of 450 g per pipe length centimetre, whereas the untreated samples collapsed of their own weight so that no proper measurements were obtained. In the penetrometer test, the values for treated pieces were about 1.5 times higher than those for untreated ones. Tests were also done by using more gas, whereby fresh strength values which were even 2 - 3 times higher were obtained.

Other tests were also done both with laboratory equipment and with full-scale production equipment, that is, with a hollow-core slab slide casting machine of the extruder type. In the performed tests, the method was found to work in the expected way.

The above is a description of an application of the method to a slide casting machine equipped with feeding screws. Hollow-core slabs are cast also by using a so-called slip-form device having none of the feeding screws described above. Fresh concrete of slightly more fluid consistency is used in the device and compaction is by vibration. The hydrostatic pressure of the concrete mix creates the casting pressure. The method according to the invention can also be applied in such a method. It may then suffice to lead carbon dioxide only onto the top surface of the product. In this way, the top surface is hardened and it is prevented from sagging at the cavities.

The method is suitable for use not only in casting hollow-core slabs but also when casting other products produced by slide casting.

## Claims

1. A method for slide casting a concrete product, comprising using a slide casting machine which compacts a concrete mix having a consistency suitably stiff for the slide casting, wherein the hardening reaction of the concrete mix is speeded up by adding to the concrete mix an additive which speeds up this reaction and which is led into the concrete mix before the concrete mix is shaped into its final form and extruded from the slide casting machine, the additive being carbon dioxide gas; characterised in that:

   the carbon dioxide is discharged from a pressure vessel and is heated to keep its temperature at above 0 °C;
   the overpressure of the carbon dioxide is 1 - 20 atmospheres;
   the quantity of the carbon dioxide measured at atmospheric pressure is 0.1 - 3 times the volume of the concrete mix; and
   the carbon dioxide is supplied into the concrete mix not more than 60 seconds before the final compaction of the concrete mix.

2. A method according to claim 1, wherein the main part of the air in the concrete mix is replaced with carbon dioxide.

3. A method according to claim 1 or 2, wherein the desired effects of carbon dioxide on the concrete mix are controlled by the quantity of carbon dioxide led into the concrete mix.

4. A method according to any one of claims 1 - 3, wherein, by adding the carbon dioxide, the volume weight of the product is increased by at least 35 kg/m$^3$, compared with a product made without adding carbon dioxide.

5. A method according to claim 4, wherein the volume weight of the product is increased by about 50 kg/m$^3$ compared with a product made without adding carbon dioxide.

6. A method according to any preceding claim, wherein the carbon dioxide is heated to keep its temperature at least at 18°C.

7. A method according to any preceding claim, wherein the overpressure of the carbon dioxide is about 10 atmospheres.

8. A method according to any preceding claim, wherein the quantity of the carbon dioxide measured at atmospheric pressure is 0.5 - 1 times the volume of the concrete mix.

9. A method according to any preceding claim, wherein the carbon dioxide is supplied into the concrete mix 1 - 30 seconds before the final compaction of the concrete mix.

10. Apparatus for casting a concrete product having one or more cavities by a slide casting method using a pressurised concrete mix, which apparatus has a mould part for moving on a casting bed (1) and formed by side and top surfaces and also forming a compaction chamber containing one or more compacting members (5), and which apparatus is provided with means (7, 8) leading into the compaction chamber at feeding screws (4) for leading additive into the concrete mix, characterised in that the means for leading the additive into the concrete mix comprises one or more nozzles (8) for feeding pressurised gas and a flow meter (12) connected to each nozzle (8).

11. Apparatus according to claim 10, further comprising means (10) for heating the gas, which is discharged from a pressure vessel (6) into the compaction chamber.

## Patentansprüche

1. Verfahren zum Fahrgießen eines Betonprodukts, bei dem man eine Fahrgießmaschine einsetzt, die ein Betongemisch verdichtet, welches eine zum Fahrgießen geeignete, feste Konsistenz aufweist, wobei man die Abbindereaktion des Betongemisches durch Zusatz eines Additivs zum Betongemisch beschleunigt, welches diese Reaktion beschleunigt und welches man dem Betongemisch zuführt, bevor man das Betongemisch in seine endgültige Form bringt und aus der Fahrgießmaschine extrudiert, wobei das Additiv Kohlendioxidgas ist; **dadurch gekennzeichnet, daß**

   man das Kohlendioxid aus einem Druckkessel entläßt und erwärmt, um seine Temperatur oberhalb von 0 °C zu halten;
   der Überdruck des Kohlendioxids 1 bis 20 Atmosphären beträgt;
   die Menge des Kohlendioxids, gemessen bei Atmosphärendruck, das 0,1 bis 3fache des Volumens des Betongemisches beträgt; und
   man das Kohlendioxid dem Betongemisch nicht früher als 60 Sekunden vor dem endgültigen Verdichten des Betongemisches zuführt.

2. Verfahren nach Anspruch 1, bei dem der Hauptteil der Luft im Betongemisch durch Kohlendioxid ersetzt wird.

3. Verfahren nach Anspruch 1 oder 2, bei dem man die gewünschten Wirkungen des Kohlendioxids auf das Betongemisch über die Menge des dem Betongemisch zugeführten Kohlendioxids regelt bzw. steuert.

4. Verfahren nach einem der Ansprüche 1 bis 3, bei dem durch den Zusatz des Kohlendioxids das Volumengewicht des Produkts, verglichen mit einem ohne Zusatz von Kohlendioxid hergestellten Produkt, um mindestens 35 kg/m$^3$ erhöht wird.

5. Verfahren nach Anspruch 4, bei dem das Volumengewicht des Produkts, verglichen mit einem ohne Zusatz von Kohlendioxid hergestellten Produkt, um etwa 50 kg/m$^3$ erhöht wird.

6. Verfahren nach einem der vorhergehenden Ansprüche, bei dem das Kohlendioxid durch Erwärmen bei mindestens 18 °C gehalten wird.

7. Verfahren nach einem der vorhergehenden Ansprüche, bei dem der Überdruck des Kohlendioxids etwa 10 Atmosphären beträgt.

8. Verfahren nach einem der vorhergehenden Ansprüche, bei dem die Menge des Kohlendioxids, gemessen bei Atmosphärendruck, das 0,5 bis 1fache des Volumens des Betongemisches beträgt.

9. Verfahren nach einem der vorhergehenden Ansprüche, bei dem man das Kohlendioxid dem Betongemisch 1 bis 30 Sekunden vor dem endgültigen Verdichten des Betongemisches zuführt.

10. Vorrichtung zum Gießen eines Betonprodukts, welches eine oder mehrere Hohlräume aufweist, mit einem Fahrgießverfahren unter Einsatz eines druckbeaufschlagten Betongemisches, wobei die Vorrichtung einen Gießbereich aufweist, der sich auf einem Gießunterteil (1) bewegt und von seitlichen und oberen Oberflächen gebildet ist und außerdem eine Verdichtungskammer bildet, die ein oder mehrere Verdichtungselemente (5) enthält, und wobei die Vorrichtung eine Einrichtung (7, 8) aufweist, die bei Beschickungsschnecken (4) zu der Verdichtungskammer führt, um dem Betongemisch ein Additiv zuzuführen, **dadurch gekennzeichnet, daß**

die Einrichtung zum Zuführen des Additivs zum Betongemisch eine oder mehrere Düsen (8) zum Beschicken von druckbeaufschlagtem Gas und einen Durchflußmesser (12) aufweist, der an jede Düse (8) angeschlossen ist.

11. Vorrichtung nach Anspruch 10, weiter aufweisend eine Einrichtung (10) zum Erwärmen des Gases, welches von einem Druckkessel (6) in die Verdichtungskammer entlassen wird.

**Revendications**

1. Procédé de moulage coulissant d'un produit en béton, comprenant l'utilisation d'une machine de moulage coulissante qui compacte un mélange de béton d'une consistance suffisamment rigide pour un moulage coulissant, où la réaction de durcissement du mélange de béton est accélérée en ajoutant au mélange de béton un additif qui accélère cette réaction et qui est introduit dans le mélange en béton avant que le mélange en béton soit amené dans sa forme finale et qui est extrudé de la machine de moulage coulissante, l'additif étant un gaz de dioxyde de carbone ;
caractérisé en ce que :

le dioxyde de carbone est évacué d'un récipient sous pression et est chauffé pour maintenir sa température au-dessus de 0°C ;
la surpression du dioxyde de carbone est de 1-20 atmosphères ;
la quantité du dioxyde de carbone mesurée à la pression atmosphérique représente 0,1-3 fois le volume du mélange de béton ; et
le dioxyde de carbone est introduit dans le mélange de béton à 60 secondes au plus avant le compactage final du mélange de béton.

2. Procédé selon la revendication 1, dans lequel la part principale en air dans le mélange de béton est remplacée par du dioxyde de carbone.

3. Procédé selon la revendication 1 ou 2, où les effets recherchés du dioxyde de carbone sur le mélange de béton sont contrôlés par la quantité de dioxyde de carbone introduite dans le mélange de béton.

4. Procédé selon l'une des revendications 1 à 3, dans lequel, en ajoutant le dioxyde de carbone, le poids volumique du produit est augmenté d'au moins 35 kg/m$^3$, comparé avec un produit réalisé sans ajouter du dioxyde de carbone.

5. Procédé selon la revendication 4, dans lequel le poids volumique du produit est augmenté selon environ 50 kg/m$^3$, en comparaison avec un produit réalisé sans ajouter du dioxyde de carbone.

6. Procédé selon l'une des revendications précédentes, où le dioxyde de carbone est chauffé pour maintenir sa température au moins à 18°C.

7. Procédé selon l'une des revendications précédentes, dans lequel la surpression du dioxyde de carbone est d'environ 10 atmosphères.

8. Procédé selon l'une des revendications précédentes, dans lequel la quantité du dioxyde de carbone mesurée à la pression atmosphérique représente 0,5-1 fois le volume du mélange de béton.

9. Procédé selon l'une des revendications précédentes, dans lequel le dioxyde de carbone est introduit dans le mélange de béton 1-30 secondes avant le compactage final du mélange de béton.

10. Appareil pour mouler un produit en béton ayant une ou plusieurs cavités par un procédé de moulage coulissant en utilisant un mélange de béton sous pression, ledit appareil comportant une partie de moule pour se déplacer sur un lit de moulage (1) et formée par des surfaces latérales et supérieure et formant également une chambre de compactage contenant un ou plusieurs éléments de compactage (5), et ledit appareil étant équipé de moyens (7, 8) menant dans la chambre de compactage à des vis d'amenée (4) pour conduire l'additif dans le mélange de béton, caractérisé en ce que les moyens pour mener l'additif dans le mélange de béton comprennent une ou plusieurs buses (8) pour l'amenée du gaz sous pression et un débitmètre (12) connecté à chaque buse (8).

11. Appareil selon la revendication 10, comprenant en outre un moyen (10) pour chauffer le gaz, qui est évacué d'un récipient sous pression (6) dans la chambre de compactage.

# Fig.1.

EP 0 701 503 B1

# Fig.2.

15 bar    10 bar

10

220

+20

7

8

12

— 10

— 5

— 2

9

9

6

6

CO₂    CO₂

11

T = + 20°C
P = + 55 bar

EP 0 701 503 B1

## Fig.3a.

$CO_2$

## Fig.3b.

REFERENCE